# EUROPEAN PATENT APPLICATION

(11) **EP 1 258 279 A2**
(43) Date of publication of application: **20.11.2002**
(21) Application number: 02010713.2
(22) Date of filing: 14.05.2002
(51) Int. Cl.: B01D 53/22, C01B 21/04

(54) **Membrane apparatus for the production of gaseous nitrogen**

(30) Priority: 14.05.2001 IT FI20010088
(71) Applicant: Eurosider S.a.S. di Milli Ottavio & C., 58100 Grosseto (GR) (IT)
(72) Inventor: Milli,Ottavio, 58100 Grosseto (IT)
(74) Representative: Gervasi, Gemma, Dr.

(57) **Abstract**

Membrane apparatus for the production of gaseous nitrogen comprising an air-compression system (C), a dryer (D) provided with a precooler (R), an oil cooler (S), a compressed-air tank (SR) or (1), at least a membrane separation unit, either mono- or pluri-modular (M) or (2) provided with an inlet for dry and pre-heated air (10), an outlet for permeated gases (12), and an outlet for the produced nitrogen (11). The apparatus is also equipped with some devices (PR) to pre-heat the compressed air coming from the dryer and destined to feed the unit (M) or (2).

## Description

### Field of the invention

The present invention relates to an apparatus and a method for the separation of pressurized air and particularly for the production of gaseous nitrogen obtained from air by means of membrane modules, for example, of the hollow fiber type.

### Background art

Membrane systems of various nature for extracting nitrogen from air are known in the state of the art.

It is well known that the functioning principle behind membrane systems is the selective permeation of the gases in the air.

Particularly, when pressurized air is fed into a membrane module, the "fast" gases like oxygen are separated from "slow" gases like nitrogen, which can be either collected or used straight. The nitrogen concentrations thus obtained range from 90% to 99,9% depending both on the type of fiber used and the process conditions.

Unlikely other nitrogen production systems, (the PSA systems, for example), membrane systems allow nitrogen yields at relatively high pressures (up to 15 barg), not much lower than feeding pressure, and this is a great advantage for the stocking and distribution of the obtained gas.

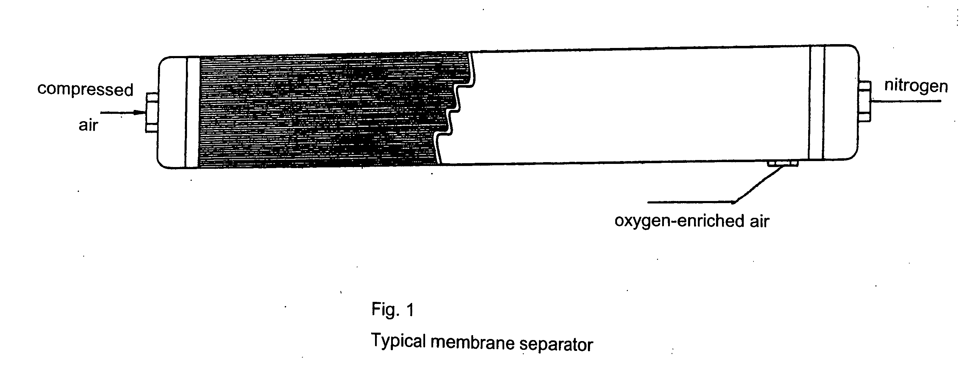

Membrane systems, both in general and with particular application of the present invention, come in the shape of tube bundle exchangers (re. Figure 1), where there are:
- thousands of polymeric, hollow fibers of practically circular section (hollow fibers), with tenths-of-a-millimeter outer diameter, fiber wall thickness of hundreds or thousands of A° and positioned parallel to the longitudinal axis, instead of tubes;
- blocks of resin, which separately and rigidly assemble and join the fibers together at both ends leaving the inlet and outlet apertures free, form the tubesheets;
- the envelope of the fiber bundle, either made from plastic or metal, and the connection covers at both ends, instead of shell and heads respectively.

The fiber assembly system described herein allows to have high surface areas per unit volume, and therefore to achieve a high throughput per hour per unit volume of fibers.

The compressed air - dehumidified, filtered and free from hydrocarbons and other harmful impurities - is fed through the inlet head, flows inside the hollow fibers towards the opposite head and exits as nitrogen purified from the so-called "fast" gases, like oxygen, water vapor, hydrogen, carbon dioxide, nitrogen and sulphur oxides, rare and light gases, which permeate on through the sides of the fibers and gather in the shell as oxygen-enriched air or "permeate".

Separation of the air into its main components, nitrogen and oxygen, is due to the differences in permeability of these gases (permeability is a feature expressed in function of solubility and diffusivity in the membrane of each component; nitrogen permeability value is slightly lower than oxygen) through the fiber sides (membranes), which are provided with micropores selecting the molecules by their shape and size.

The ability to permeation, at the same process conditions - particularly pressure and temperature - depends both on the membrane nature and the molecule features and is expressed by the so-called "permeability coefficient": this parameter is used to determine the goodness of a certain membrane for a given separation process.

The productivity of a nitrogen membrane grows with the growing of the absolute value of the oxygen permeability coefficient, while the efficiency (i.e. the ratio between produced nitrogen and ingoing nitrogen or air) increases with selectivity, i.e. the ratio between the permeability coefficient of nitrogen and oxygen, which typically ranges between 5 and 10.

In general, the flow of a particular gas permeating through a given membrane is a growing function of permeability coefficient, operating temperature, pressure differences of the inner and outer sides of the fibers (i.e. astride the membrane) and total surface of the membrane, while it is inverse to the membrane sides' thickness. It is clear that the hour throughput of the less permeable gas (nitrogen) changes according to and by effect of both the same parameters indicated above and the desired purity degree.

Typically, it has been observed that an increase in the operating temperature gives a sensible reduction in the cost of membrane systems, since the membrane productivity, i.e. the hour throughput of nitrogen per separation surface unit, can increase by a rate of max 3,3% / °C within the operating temperature range of the membranes.

Furthermore, it has been also observed that the known membrane systems do not always grant satisfying productivity and energetic yield, due to the necessity of the feeding air temperature to be raised and kept steady even up to 60°C, being said air produced by a refrigeration-cycle compression-drying unit situated upstream of the membrane.

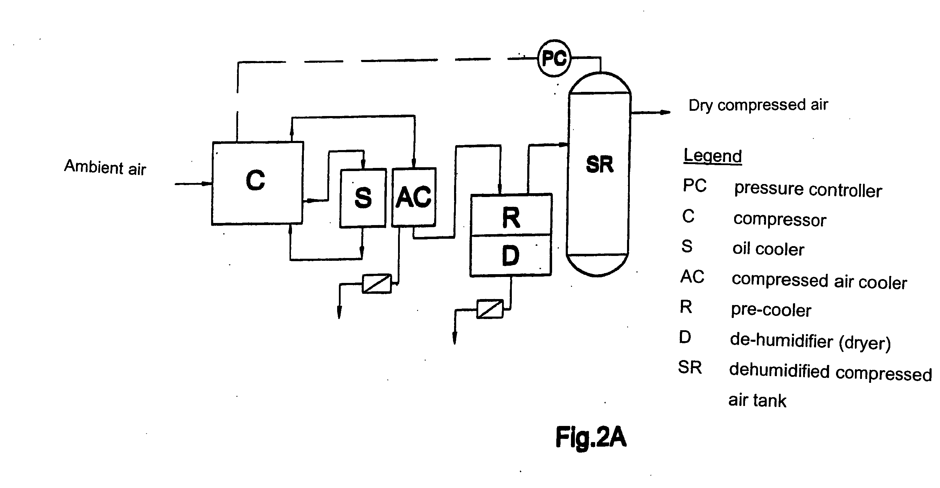

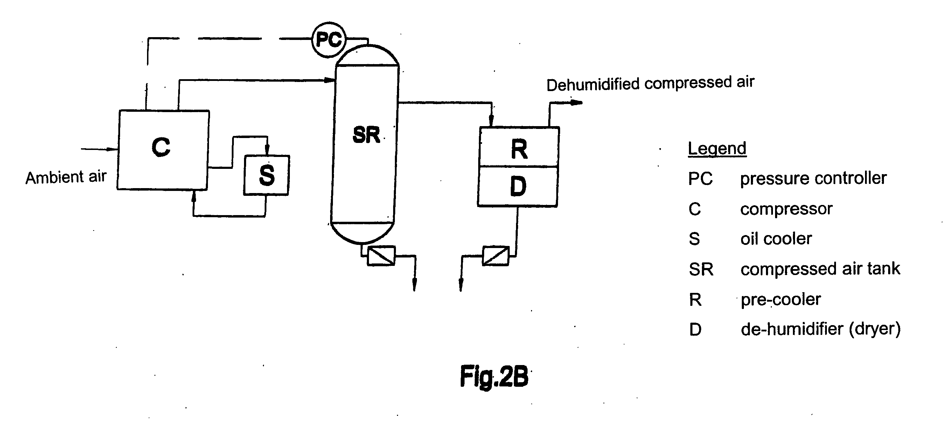

The known air compression-drying apparatus are illustrated in Figures 2A and 2B and consist of:
- referring to Fig. 2A, any type of compressor (C) (piston, screw, positive displacement, reciprocating compressors, etc.) with delivery head within 7,5 to 15 barg, 300 KW max power and driven by a pressure switch placed on the dry compressed air tank (SR), an air- or water-cooled after-cooler (AC), a refrigeration-cycle dryer or dehumidifier (D) equipped with an air/air pre-cooler (R), an air exchanger for oil cooling (S) that can be matched with the after-cooler (AC); typically, in these apparatus the compressed air delivery temperature is around 80 °C, the hot oil temperature is around 90 °C, and the temperature of the cooled air blown out of (AC) is 10 to 15 °C higher than air (or water) room temperature with max limit generally set at around 55 °C to avoid overloading the refrigeration cycle. The temperature of dry air blown out of (R) is approx 10° C lower than the ingoing air and is variable, due to the fact of being dependent on the room air (or water) temperature in (AC).
- referring to Fig. 2B, any type of compressor (C) (piston, screw, positive displacement, reciprocating compressors, etc.) with delivery head within 7,5 to 15 barg, 30 KW max power and driven by a pressure switch placed on the humidity-saturated compressed air tank (SR) acting also as after-cooler for heat dissipation in the environment, a refrigeration-cycle dryer or dehumidifier (D) with pre-cooler (R), an air exchanger for oil cooling (S);
   typically, in these apparatus the compressed air delivery and hot oil temperatures are approx 60°C higher than ambient temperature, while the temperature of cooled air blown out of the tank (SR) is max 20°C higher than ambient air temperature.

The temperature of dry air blown out of (R) varies according to the ambient air temperature and is approx 5 °C higher.

### Aim of the invention

One aim of the present invention is to remedy the problems of known apparatus by providing an apparatus and a method to optimize both productivity and energetic yield for the production of gaseous nitrogen at relatively higher pressures than those obtainable using PSA systems.

Another aim of the present invention is to propose an integrated, compact-sized-and-structured apparatus coming in the traditional shape of compression-drying systems, supplying alone oxygen-enriched air, in addition to nitrogen and compressed air - both of them responding to desired requirements of purity, pressure, temperature and humidity degree.

### Summary of the invention

In conformity with the aims pursued by the present invention, an apparatus has been constructed as described in the attached claims.

Further features of the apparatus are disclosed in the dependent claims.

### List of drawings

The advantages will become apparent from consideration of the description herein below and relevant drawings, which are to be regarded as non-restrictive illustrative examples:
- Fig.1 is a membrane module that can be used in the apparatus according to the invention;
- Fig. 2A is a first operating diagram of a traditional compressor;
- Fig. 2B is a second operating diagram of a traditional compressor;
- Fig. 3 is a diagram of a first embodiment of the apparatus according to the invention, where the dry air pre-heating unit (PR) uses the heat dissipated in the environment by air-cooled (AC) or (S);
- Fig. 4 is a diagram of a second embodiment of the apparatus according to the invention, where the dry air pre-heating unit (PR) is duly placed on the air circuit (or on the oil circuit);

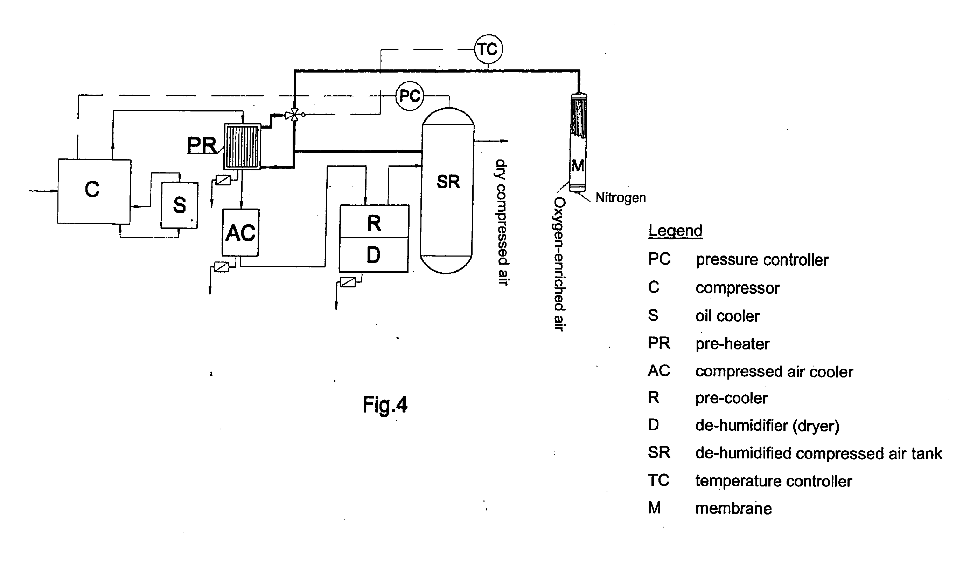

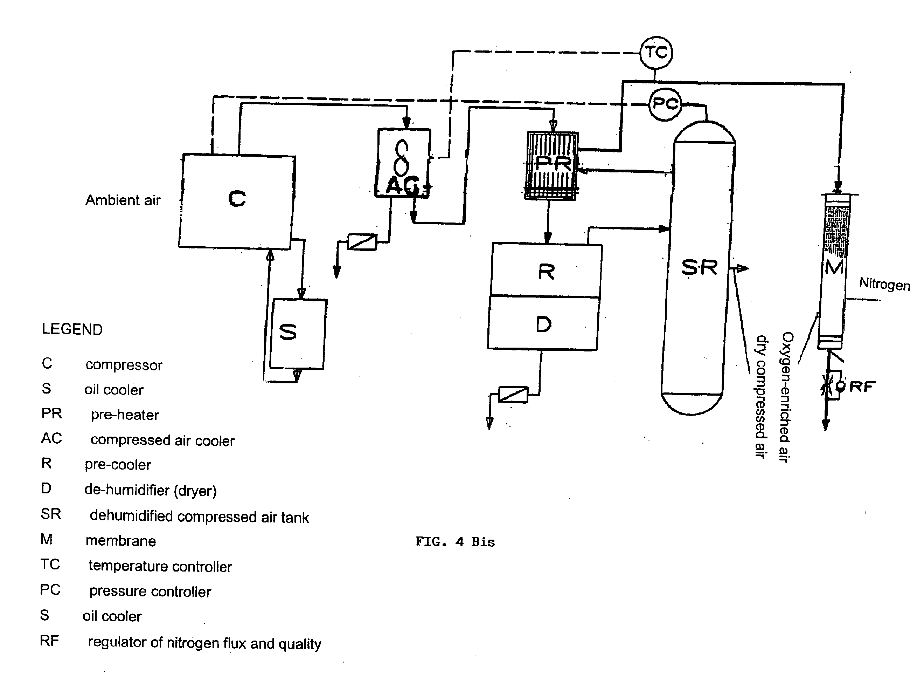

- Fig. 4bis is an alternative embodiment of the apparatus of Fig.4;

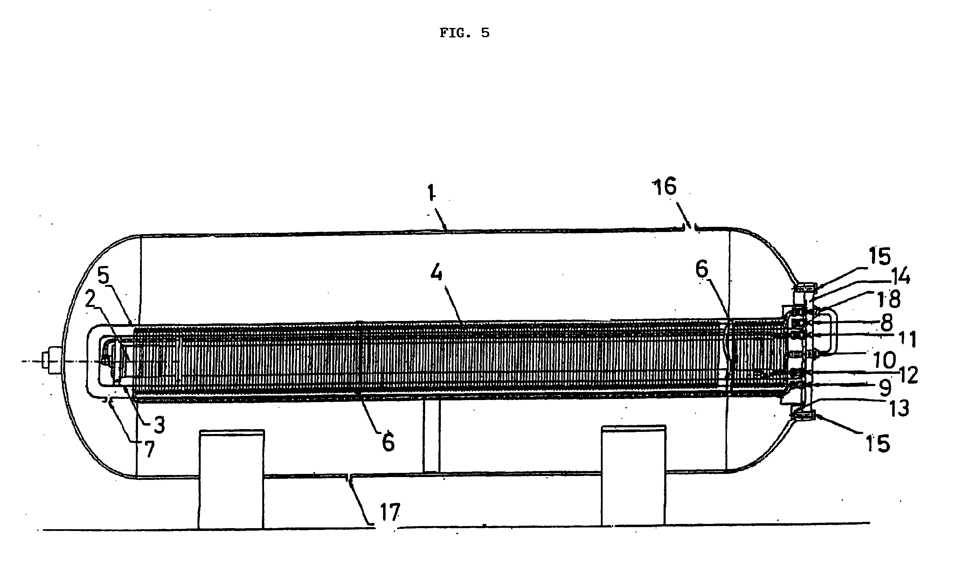

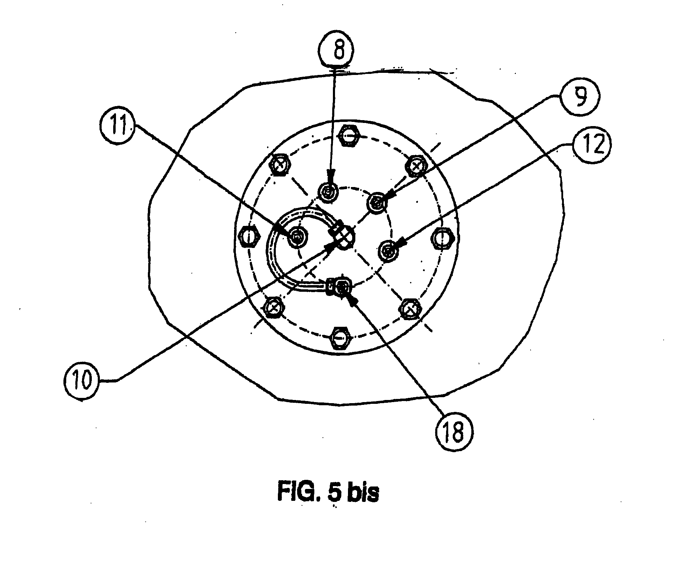

- Fig. 5 is a diagram of a third embodiment of the apparatus according to the invention, where the separation unit is equipped with a pre-heating serpentine coil (PR) and placed inside the humidity-saturated air horizontal tank (SR), which is also used heat dissipater;
- Fig.5 bis is a front head-view of the apparatus of Fig.5;

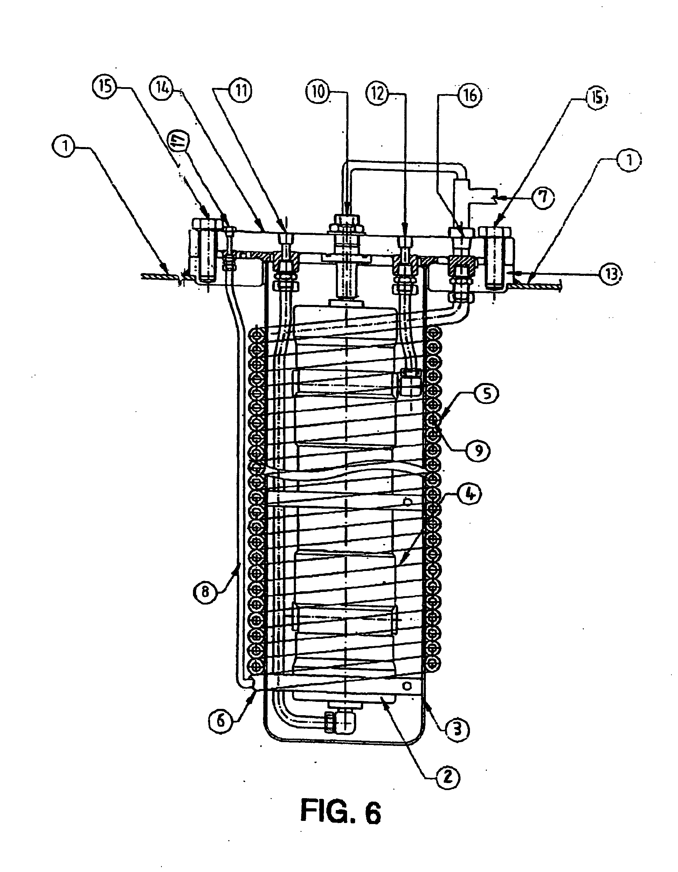

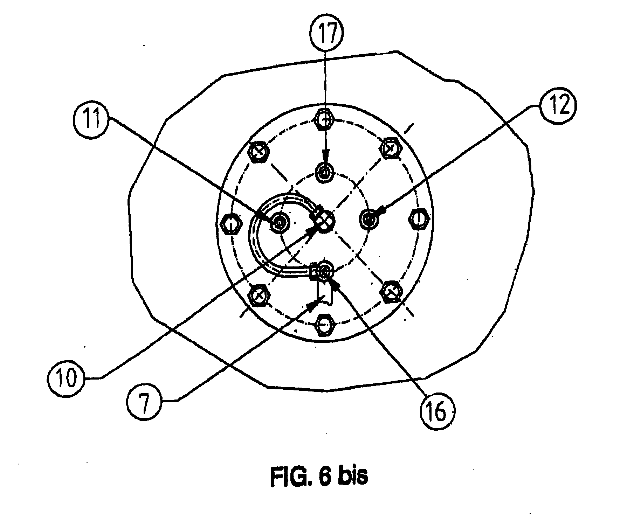

- Fig. 6 is a diagram of a fourth embodiment of the apparatus according to the invention, where the separation unit equipped with pre-heating serpentine coil (PR) and placed inside the humidity-saturated vertical tank (SR), which is also used as heat dissipater;
- Fig. 6 bis is a front head-view of the apparatus of Fig.6;

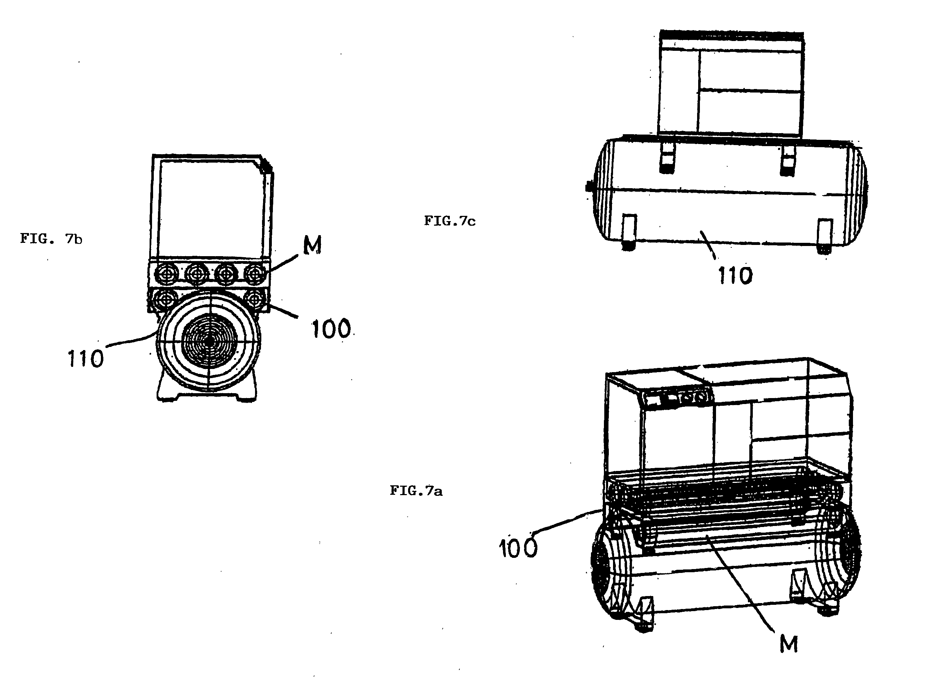

- Figures 7a-7c are a perspective and a front view respectively of a preferred embodiment of the apparatus integrated with the structure of a traditional compressor group, a side view thereof is illustrated in Fig.7c.

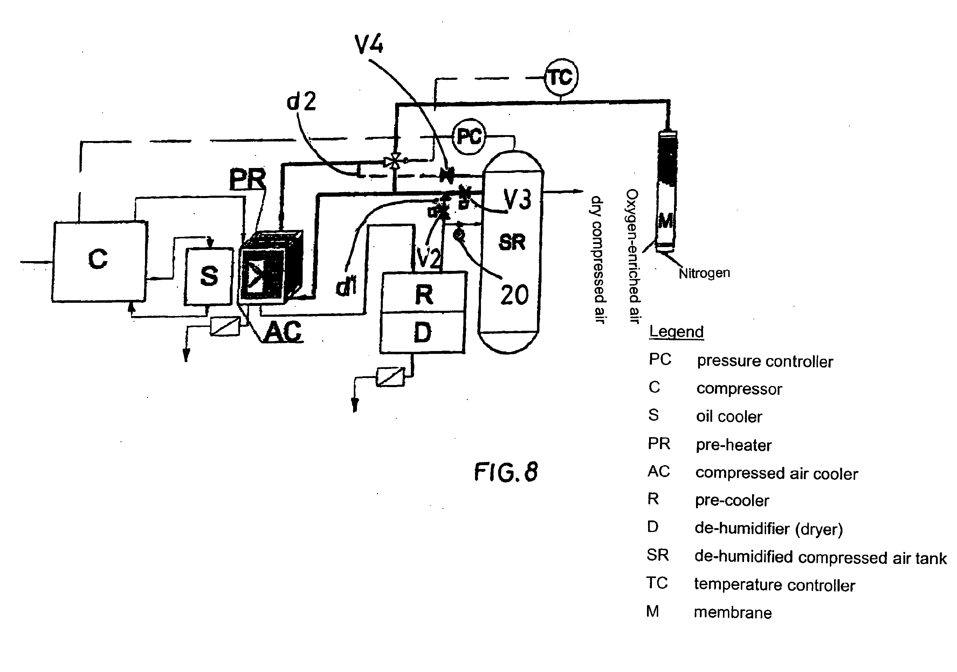

- Fig. 8 is a further embodiment of the apparatus.

### Detailed description

Referring to the attached figures, an apparatus for the production of gaseous nitrogen comprising a compression-drying group of the types disclosed in Fig. 2A and 2B as described above, a dry air pre-heating radiator (PR) and an air separation membrane unit (M) either of the mono- or pluri-modular type.

According to the invention, the pre-heating radiator of the dry air destined to the nitrogen separation membrane module has been constructed in such a way that the air produced by the compressor and first forced through the refrigeration-cycle dryer (D) to obtain dry air is then heated again by the same radiators eliminating part of the compression heat. In this way, the heat that would be otherwise dissipated in the environment is recovered.

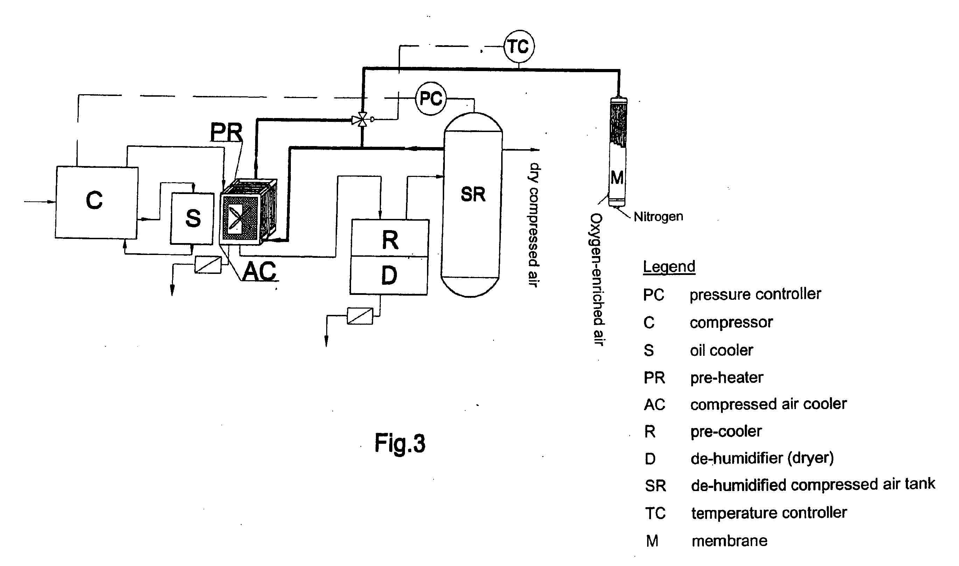

Referring to Fig. 2A and to the example of Fig. 3, an apparatus according to the invention comprises a pre-heater (PR), preferably of the finned tube or honeycomb types, linked to the after-cooler (AC) of similar type where the compressed air coming from (C) is cooled by fan-blown ambient air.

In this case, the ambient air blown by the fan out of the after-cooler (AC) is used in (PR) as heating mean at a max temperature of 60 °C. In this way, the compression heat, which would be otherwise eliminated in the environment, can be partially recovered and used to pre-heat the dry cold air blown out of (SR). Cold air is then forced into the separation unit (M) at the ideal temperature and humidity conditions.

Preferably, a temperature control device (TC) of the dry and pre-heated feeding air of membrane (M) and acting on a by-pass valve of the preheater (PR) is installed.

In a second embodiment, the preheater (PR) of a similar type as the one described above, can be linked to the oil-cooling radiator (S), instead to (AC), with fan-blown ambient air. In this embodiment too, ambient air blown by the fan out of radiator (S) is used as heating mean at a max temperature of 60 °C, thus partially recovering the compression heat, which would be otherwise eliminated in the environment.

This solution advantageously allows for the feeding air ideal operating conditions to be rapidly reached; furthermore, the presence of an air-heating device powered by an outer energy source in addition to the one required by the compression-drying group is no longer necessary.

Referring to Fig. 2A and in the example of Fig. 4, an apparatus according to the invention comprises a preheater (PR) of the tube bundle, tubesheet or double-pipe types, where heat exchange is performed counter-current between the heating fluid and the fluid to be heated.

In this case, the compressed air blown out of (C) is used in (PR) as heating mean at a temperature of approx 80 °C, thus partially recovering the compression heat, which would be otherwise eliminated in the environment by the after-cooler (AC).

The recovered heat is used to pre-heat the dry cooled air and force it into the separation unit (M) at the ideal temperature and humidity conditions.

Preferably, a temperature control device (TC) of the dry and pre-heated feeding air of membrane (M) and acting on a by-pass valve of the preheater (PR) is installed.

In a second embodiment, the preheater (PR), which is of a similar type as the one described above, can use the lubricating oil of the compressor (C) as heating mean at a temperature of approx 80 °C, thus partially recovering the compression heat, which would be otherwise eliminated in the environment by the radiator (S).

The recovered heat is used to pre-heat the dry cooled air and force it to the separation unit (M) at the ideal temperature and humidity conditions.

This solution advantageously allows for the feeding air ideal operating conditions to be rapidly reached; furthermore, the presence of an air-heating device powered by an outer energy source in addition to the one required by the compression-drying group is no longer necessary. On the contrary, said solution allows for a reduction in the drying system energy requirements.

According to a further aspect of the invention related to the compression-drying groups with diagram of Fig. 2B and illustrated in Figure 5, the membrane unit (2), protected by a pressure-resistant shell (3), is placed straightly inside the horizontal tank (1) and equipped with a serpentine coil pre-heating the feeding dry air (4), which wraps the shell (3) with a suitable number of spires, said serpentine coil being preferably made from copper.

The serpentine coil (4) is placed into the gap existing between the shell (3) and a concentric tubular element (5), which can be equipped with transverse plates (6), communicates with the inside of the tank (1) through the opening (7) and used to convey the hot compressed air, counter-current to the cold dry air, which is fed from the inlet (8) into the spiral (4) through the pipe (9).

The water vapor condensate resulting from the cooling of the hot air coming from compressor is discharged into the tank through the opening (7) and from the tank (1) through the opening (17).

The pre-heated, dry air is blown out of the serpentine coil end (18) and is fed into the membrane (2) through the opening (10), while the nitrogen and the oxygen-enriched air produced are blown out of the ducts (11) and (12) respectively.

The assembly is clamped onto the tank (1) through the welded flange (13) and the sealing plate (14); it can be removed by unscrewing the stud bolts (15), said plate housing both the openings and the relevant fittings.

Preferably, a temperature control device (TC) of the dry and pre-heated feeding air of membrane (M) and acting on a by-pass valve of the preheater (PR) is installed.

This solution advantageously allows for the membrane (M) (2) and the dry feeding air ideal operating conditions to be rapidly reached; furthermore, the presence of an air-heating device powered by an outer energy source in addition to the one required by the compression-drying group is no longer necessary. Furthermore, said solution allows for a reduction in the energy requirement of the drying system (D) of Fig. 2B, which receives partially cooled and dehumidified ingoing air.

According to a still further aspect of the invention, referring to the compression-drying groups with diagram of Fig. 2B and illustrated in Figure 6, the membrane unit (2), protected by a pressure-resistant shell (3), is placed straightly inside the vertical tank (1) and equipped with a double-pipe serpentine coil pre-heating the feeding dry air (4), which wraps the shell (3) with a suitable number of spires, said serpentine coil being preferably made from copper.

In the serpentine coil outer pipe (5) communicating at its end (6) with the inside of the tank (1), the hot compressed air is passed through the duct (7) counter-current to the cold dry air which is fed into the internal pipe (9) of the spiral (4) through the inlet (17) and the pipe (8).

The water vapor condensate resulting from the cooling of the hot air coming from compressor is discharged by gravity into the tank through the opening (6), said tank being equipped with condensate drain.

The pre-heated, dry air is blown out of the end (16) of the serpentine coil (4) and is fed into the membrane (2) through the opening (10), while the nitrogen and the oxygen-enriched air produced are blown out of the ducts (11) and (12) respectively.

The assembly is clamped onto the tank (SR) (1) by the welded flange (13) and the sealing plate (14); it can be removed by unscrewing the stud bolts (15), said plate housing both the openings and the relevant fittings.

Preferably, a temperature control device of the dry and pre-heated feeding air of membrane (M) and acting on a by-pass valve of the preheater (PR) is installed.

This solution advantageously allows for the membrane (M) (2) and the dry feeding air ideal operating conditions to be rapidly reached; furthermore, the presence of an air-heating device powered by an outer energy source in addition to the one required by the compression-drying group is no longer necessary. On the contrary, said solution allows for a reduction in the energy requirements of the drying system D of Fig. 2B.

Figure 8 is further embodiment of the apparatus.

In this case, the drying-cooling group (R), (D) is linked both to the tank (SR) and, by an offtake (d1), also to the outlet duct conveying the dry air from (SR) to the pre-heating group (PR). The outlet duct of the pre-heated air blowing from PR to the membranes is equipped with an offtake (d2) directed to the tank (SR).

Furthermore, a calibrated disc (20) is mounted on the pipeline through which the dry air passes from R, D to SR and On/Off motor-operated valves V2, V3 and V4 (V4 can also be a check valve) are located onto the offtake (d1), downstream of (SR), on the dry air pipeline connecting (SR) to (PR) and onto the offtake (d2) respectively. Finally, an air-temperature regulating valve (V5) for the air feeding the separation membranes is also present.

This solution advantageously allows for the optimization of dry air and/or nitrogen yield and the energy-saving achievements in the drying and cooling cycle as described above.

In particular, the following operating conditions occur while producing dry air:

| | |
|---|---|
| Valve V2 | open |
| Valve V3 | closed |
| Valve V4 | open |
| Valve V5 | closed |

The following operating conditions occur while producing nitrogen:

| | |
|---|---|
| Valve V2 | closed |
| Valve V3 | open |
| Valve V4 | closed |
| Valve V5 | being regulated. |

With the technical solutions disclosed above, the pre-heating apparatus (PR) of the air destined to be fed into the membrane separation units and the membrane units (M) can be combined and integrated in the compression-drying groups, which operate as shown in the diagram of Fig. 2A or 2B and according to the following principles:
- maintenance of the battery limits and use of the above-mentioned compression-drying groups' bearing structure, which in many cases is the compressed-air tank;
- placement of the membrane units (M) in close contact with the heating bodies (AC) or (S), or of the hot air compressed tank (1), or still, conveyance on the membrane units of hot air coming from said bodies, so as to create an ideal-temperature common environment for operating purposes, and in order to avoid or eliminate any problem of water vapor condensation in the membranes, said environment consisting for example of a fairing (100) enclosing both the membranes and the elements of the compressor group;
- keep the architecture of said compression-drying groups unchanged;
- avoid any increase in the overall dimensions of the compression-drying groups, like in the cases where the membrane units (2) are located inside the compressed air tank (1), or rather allow for the least possible increase.

Referring to Fig. 7a-b-c, for example, a compact structured and sized integrated apparatus can be constructed (7a-b), which keeps the architecture of the compression-drying group (7c) unchanged and can supply alone oxygen-enriched air, in addition to nitrogen and compressed air - both of them responding to the desired requirements of purity, pressure, temperature and humidity degree.

In this particular embodiment, for example, besides the compression-drying group already present in the compressor group of Fig. 7c, an apparatus comprising a pre-heating unit (PR) integrated in said group and one or more mono- or pluri-modular membrane units (M), either inside or outside the compressed air tank (SR), is provided with control equipment, which is not illustrated in the figure, and preferably consisting of a purity analyzer for the produced nitrogen, a temperature indicator-controller for the inlet air blowing through (M) acting on an automatic by-pass valve of the heating elements (PR), a pressure indicator for the ingoing air blowing through (M) or the outgoing nitrogen passing through (M), a flowmeter to read the stream rate of the nitrogen blown out of (M), a manual or automatic adjusting valve for the nitrogen stream blown out of (M) with preset quantity and quality values.

With reference to the various embodiments disclosed herein, it is understood that they can always be equipped with a flange connection of the same type as disclosed in Figure 5, in order to allow for a modular layout meeting various requirements.

In a particularly advantageous embodiment of the present invention, the apparatus is equipped with motorized valves interlocked with an electronic control device for the adjustment and presetting of the apparatus operating parameters according to various needs.

For example, five or more adjustments can be made, which can be selected by command and are duly preset for all applications requiring high purity degree or high yield of nitrogen.

A method for the production of nitrogen from compressed air according to the invention comprises the following phases:
air compression - drying with groups of the same types as disclosed in Fig. 2A or 2B;
separation from compressed air and production of nitrogen by means of hollow fibers;
   - pre-heating of the compressed air destined to separation through thermal exchange with the heat generated during said compression phase;
   - cooling of the compressed air destined to (PR);
   - separation of the pre-heated compressed air and membrane-based production of nitrogen;
   - and comprising a control phase of the compressed air temperature upstream of (PR) through thermal exchange with ambient air.

The present invention has been disclosed with reference to preferred embodiments thereof. It is understood that equivalent embodiments are possible all without departing from the protection scope granted by this patent.

## Claims

1. A membrane apparatus for the production of gaseous nitrogen comprising: an air compressor (C), cooling means of compressed air, heat exchange means (PR) to pre-heat the cooled compressed air destined to feed one or more separation membranes (M, 2),
**characterized by** the fact that said means (PR) are air heat exchange means and by the fact that some means controlling the compressed air temperature in an adjustable way by heat exchange with ambient air are present upstream of (PR).

2. The membrane apparatus according to claim 1, wherein said control means comprise a fan (AC) blowing ambient air directly on said means (PR), said ambient air being heated by heat exchange with the hot compressed air produced by (C).

3. The membrane apparatus according to claim 1, wherein said compressor (C) is provided with an oil cooling device (S) and said control means comprise a fan (AC) blowing ambient air directly on said means (PR), said ambient air being heated by heat exchange with the cooling oil of (S).

4. The apparatus according to claim 1, wherein said control means comprise a cooler of the compressed air produced by (C) and said pre-heater (PR) is a heat exchanger through which the cooled air directed towards the unit (M or 2) and the regulated-temperature compressed air coming from (AC) flow.

5. The apparatus according to claim 1, wherein said preheater (PR) is a double preheater with finned tubes, of the honeycomb, tube bundle and tubesheet types or with concentric tubes.

6. The apparatus according to one or more of claims 1-5, wherein said cooling means comprise a refrigeration-cycle dryer (R, D) of compressed air destined to (PR).

7. The apparatus according to claim 6, comprising a tank (SR, 1) containing the dry compressed air produced by (R,D) and destined to (PR) and to a possible utility.

8. The apparatus according to claim 7, wherein said drying-cooling group (R, D) is linked to the tank (SR) and, by an offtake (d1), also to an outlet duct (c1) conveying the dry air from (SR) to the pre-heating group (PR). The outlet duct (c2) of the pre-heated air blowing from (PR) to the membranes (M) is equipped with an offtake (d2) directed to the tank (SR).

9. The apparatus according to claim 8, further comprising:
a calibrated disc (20) mounted on the pipeline through which the dry air passes from (R, D) to (SR); On/Off motor-operated valves (V2, V3 and V4) located onto the offtake (d1), downstream of (SR), on the dry air pipeline connecting (SR) to (PR) and onto the offtake (d2) respectively; an air-temperature regulating valve (V5) for the air feeding the separation membranes.

10. The apparatus according to claim 7, **characterized by** the fact that said unit (2) is placed into a tank (1) provided with an inlet (10) for dry and pre-heated air feeding the unit (2), an outlet (11) for the produced nitrogen and an outlet (12) for permeated gases, an inlet for hot air from the compressor delivery (7 or 8) and an outlet (16) for cold and humidity-saturated air feeding the dryer (R,D).

11. The apparatus according to claim 10, wherein said heating means of the air feeding the membrane (2) comprise a serpentine coil wrapping said unit (2) installed inside a pressure tank (1) in such a way that said compressor group (C) forces the pre-heated air to the inlet (7) of the outer serpentine coil (5) heating the inner serpentine (9) that comes out of the tank and, through an outer fitting, feeds the air inlet (10) of the unit (2) with pre-heated compressed air.

12. The apparatus according to claim 11, **characterized by** the fact that said serpentine coil develops outside the shell (3) of the unit (2).

13. The apparatus according to claim 10, **characterized by** the fact that said serpentine coil (4) receives the compressed air blown out of the dryer and said heating means of the membrane (2) comprise the tank (1) inside which said membrane unit is installed (2), which acts as a heat exchanger to clear the heat produced by compression.

14. The apparatus according to claim 10, **characterized by** the fact that said unit (2) is installed inside a tank (1) by means of a movable flange connection (14).

15. The apparatus according to one or more of claims 7-14, wherein the air separation membrane unit/units (M) and said pre-heating means of dry air (PR) are integrated in an air compression-drying apparatus comprising a bearing tank of dry compressed air (110) and a fairing in common (100) so as to create an ideal-temperature common environment for operating purposes, and in order to avoid or eliminate any problem of water vapor condensation in the membranes.

16. The apparatus according one of the previous claims, wherein said pre-heating means (PR) comprise a fan eliminating the heat produced by compression and forcing the hot air towards said membrane unit (M) so as to bring the membranes up to the temperature of the feeding air, thus preventing condensate from forming inside.

17. The apparatus according to at least one of the previous claims, **characterized by** the fact that said membranes operate at a pressure value ranging between 7 and 15 bars and a temperature value between 24°C and 60°C, preferably around 54 °C.

18. The apparatus according to one or more of the previous claims, capable of producing dry compressed air and/or nitrogen in controlled conditions of purity, pressure, temperature and humidity degree.

19. A membrane apparatus for the production of gaseous nitrogen comprising: an air compressor (C), heat exchangers (PR) to pre-heat the compressed air destined to feed one or more separation membranes (M, 2), cooling means of the compressed air to be pre-heated, **characterized by** the fact that said cooling means comprise a refrigeration cycle dryer (R, D) of the dry air destined to (PR) and by the fact of comprising a tank (SR, 1) for the dry compressed air produced by (R,D) and destined to (PR) and to a possible utility.

20. A method for the production of nitrogen from compressed air, comprising the following phases:
- air compression;
- pre-heating of compressed air destined to separation by means of thermal exchange with heat generated in said compression phase;
- cooling of the compressed air destined to (PR);
- separation of the pre-heated compressed air and production of nitrogen by means of membranes;
**characterized by** the fact of comprising a control phase of the temperature of the compressed air upstream of (PR) through thermal exchange with ambient air.

21. The method according to claim 20, wherein said thermal exchange takes place between the hot compressed air produced by (C) and ambient air.

22. The method according to claim 20, wherein said thermal exchange takes place between ambient air and a liquid clearing the heat generated in said compression phase.

23. The method according to one or more of the claims 20-22, comprising a drying phase (R, D) of the compressed air destined to (PR).

24. The method according to one or more of the claims 20-23, comprising an accumulation phase of the dry compressed air produced by (R,D) destined to (PR) and made available to a possible utility.
